# EUROPEAN PATENT APPLICATION

(11) **EP 0 845 301 A1**
(43) Date of publication of application: **03.06.1998**
(21) Application number: 97309345.3
(22) Date of filing: 20.11.1997
(51) Int. Cl.: B05D 1/18, B05D 7/24

(54) **A method of applying a lubricant**

(30) Priority: 20.11.1996 US 31657 P
(71) Applicant: TEXAS INSTRUMENTS INCORPORATED, Dallas Texas 75265 (US)
(72) Inventor: Henck, Steven A., Plano, Texas 75025 (US); Johns, Leatrice M., Plano, Texas 75086 (US); Knipe, Richard L., McKinney, Texas 75070 (US)
(74) Representative: Darby, David Thomas

(57) **Abstract**

A method and material for protective coatings of micromechanical devices. The surfaces of the device are cleaned with a UV/O₃ process (20) that leaves water and/or hydroxyl species on the surfaces. The device is then exposed to a chlorosilane material (22,24, 28), which reacts with the water or hydroxyl species to form a strong monolayer. The monolayer has bonds to the surface of the device as well as to adjacent molecules in the monolayer. The exposure can be done with either a liquid or a vapor process. Finally, the devices are baked (26).

## Description

### FIELD OF THE INVENTION

This invention relates generally to the field of lubricants, and more particularly to a method for applying lubricants to micromachines.

### BACKGROUND OF THE INVENTION

Micromechanical devices include familiar structures such as motors, wheels and gears, but are of the order of microns in size. They also include specialized mechanical structures such as accelerometers and spatial light modulators. Mechanical structures, regardless of size, typically suffer from friction and sticking between moving parts. The moving parts come into contact with other moving parts or with non-moving parts. The parts can be worn down by friction and sticking and the parts can stick together, preventing the machine from operating.

Unique problems occur with micromechanical devices. Because of their minute size, it is difficult to protect the parts to avoid the problems of sticking and friction. The protectant may be a lubricant or other coating on the surfaces of the moving and non-moving parts. The coating or film must be extremely thin so that it does not interfere with the operation of the device. A thick film may cause the moving parts to be blocked or jammed.

On the other hand, a film that is not robust will not adequately protect the surfaces of the devices, resulting in device failure. The film should preferably have high molecular weight to be robust, low surface energy to reduce adhesion and lower the coefficient of friction, and should bond to the surface. Therefore, the selection of materials becomes a challenge.

In previous attempts to protect or passivate the surfaces of these devices, perfluordecanoic acid has been used (PFDA). PFDA forms an oriented monolayer on the surfaces of the device. A monolayer is a layer that is one molecule thick. This approach is shown in US Patent 5,331,454, issued July 19, 1994. However, only a weak chemical bond exists between the oriented monolayer and the aluminum surface shown in the embodiments of the above referenced patent after the monolayer has been applied.

Another difficulty with micromechanical device protectants is methods of application. The small size and delicacy of the moving parts prevent use of standard techniques for applying protectants which can destroy the device with the pressure from the application.

The monolayer in that patent was applied by chemical vapor deposition. In this process, a device with micromechanical structures was placed in an oven chamber with the PFDA. When heated the PFDA formed a vapor that deposited upon activated surfaces of the micromechanical devices. In that approach, the surfaces of the devices were activated by an oxygen/fluorine plasma.

In another approach, seen in US Patent 5,403,665, issued April 4, 1995, the surface is activated by a series of transition baths, a complicated and very precise process. Neither of these approaches results in an easily applied monolayer protectant bonded to the surfaces.

### SUMMARY OF THE INVENTION

One aspect of the invention is a protective coating for micromechanical devices. The protective coating is a monolayer of molecules that form a bond to the surface of the device and to each adjacent molecule, resulting in a robust and effective protective coating of high molecular weight. The monolayer is formed by either vapor or liquid deposition.

In embodiments of both techniques, the devices are cleaned in a UV/O₃ cleaning process and the surfaces of the device are exposed to a chlorosilane material causing a reaction that forms the coating. In embodiments of the liquid technique the devices are immersed in a solution of the material in a container, rinsed and removed from the container and then baked. In embodiments of the vapor technique the device is placed in a container with a small amount of the material in the container. After a time interval, the device is removed and baked.

It is an advantage of the invention in that it provides a robust protective coating for surfaces of micromechanical devices.

It is a further advantage of the invention in that the protective coating both bonds to the surface and to adjacent molecules in the coating.

### BRIEF DESCRIPTION OF THE DRAWINGS

For a more complete understanding of the present invention and for further advantages thereof, reference is now made to the following Detailed Description taken in conjunction with the accompanying Drawings in which:
FIGURE 1 shows the molecular structure of one embodiment of a protectant;
FIGURE 2 shows surfaces of a micromechanical device with a protecting monolayer; and
FIGURE 3 shows an embodiment of a process for applying a monolayer protectant to the surfaces of a micromechanical device.

### DETAILED DESCRIPTION OF THE PREFERRED EMBODIMENTS

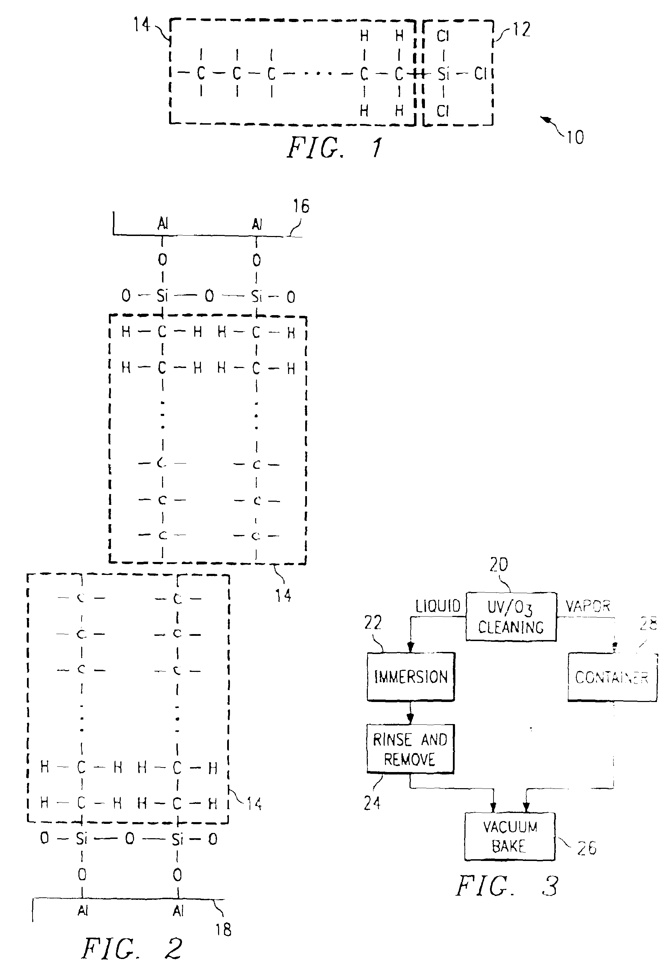

Figure 1 shows a chlorosilane species molecule used in one embodiment of the invention. This molecule 10 has a head group 12 which consists of a partially chlorinated silicon atom, and an alkyl-chain tail 14. The tail may or may not be fluorinated.

These molecules react with water or hydroxyl species on the surface of the devices, forming a strong bond to the surface and between the adjacent silane molecules. In micromechanical devices having aluminum surfaces, the reaction occurs between the SiCl₃ group shown in Figure 1 and Al₂O₃ on the surface of the device, plus water and/or hydroxyl species. A byproduct of this process is HCl. The resulting bonds are shown in Figure 2.

In Figure 2, the aluminum on the surfaces 16) and 18 has bonded with the silane molecules. Additionally, the silanes have bonded to the adjacent silane molecules, something that did not occur in the previous approaches to this problem. This chemical reaction results in the surfaces 16 and 18 having a strongly bonded, robust monolayer film with a high molecular weight.

Figure 3 shows two embodiments of a method for depositing the film. It can be deposited in either a liquid or vapor process. Regardless of which is used, the device preparation is the same and both involve exposing the device to the material to form the coating.

A unique UV/O₃ cleaning step 20 is used to clean and prepare the surface for deposition. The step uses room air which is somewhat humid, leaving the device surface covered with water and/or hydroxyl species as well as removing any organic contamination.

The exposure process in the liquid flow has two steps. The devices are immersed in a 1% (v/v) solution in toluene in a dry nitrogen filled glove bag for 30 seconds to 1 hour, at step 22. In step 24 the devices are rinsed with fresh toluene and removed from the glove bag. In step 26 they are placed in a vacuum oven for baking for a time interval that varies from 20 minutes to 1 hour. Experiments have shown that 30 minutes seems optimal.

The baking step has several results. It removes any residual solvent and reaction products, removes any excess reactants, completes the reaction with the surface and completes the cross-linking between adjacent silane molecules.

In the vapor technique, exposure is achieved at step 28 where the devices to be coated are placed in a container in a water free atmosphere, such as a nitrogen purged glove bag. A few drops of one of the above materials, for example, are then placed in the lid of the container and the lid placed on the container. The container remains at room temperature or is brought to an elevated temperature to speed the process. After a time interval the part is removed from the container and baked. The time interval for the part to remain in the container may vary from 20 minutes to 2 hours, with 40 minutes seeming optimal in experiments. The baking step 26 may be for times ranging from four to thirty minutes, with 30 minutes appearing optimal in experiments.

The vapor deposition technique has advantages over the liquid. No solvent like toluene is used, lessening environmental concerns as well as eliminating the need to remove solvent from the devices. Additionally, the lack of a solvent means that no drying is required and collapse of the micromechanical device due to surface tension is eliminated. Films have been made using this technique from 1H, 1H, 2H, 2H, perfluorodecyltrichlorosilane; 1H, 1H, 2H, 2H, pefluorodecyldichloromethylsilane; 1H, 1H, 2H, 2H, perfluorooctylchlorodimethylsilane, octadecyltrichlorosilane, octyltrichlorosilane, propyltrichlorosilane, and dodecyltrichlorosilane.

In experiments, micromechanical devices were coated using the vapor phase technique. The devices used were micromechanical spatial light modulator arrays comprising individual mirror elements suspended on posts over addressing and landing electrodes. When the individual mirrors are addressed by the address electrodes, electrostatic forces cause them to move and touch down on the landing electrodes. When they receive new data, they are given a reset pulse voltage to lift them off of the landing electrode. In devices that have undergone this process, 90% of them worked without requiring any kind of reset. PFDA processed devices required the reset pulse and required higher voltages to move the mirrors. The use of these devices is only an example of the improvements caused by these films and is in no way intended to limit the use of these films to these types of structures.

A Sessile Drop technique measured the surface energies of these films. In this technique a drop of liquid is placed on a plane surface and the angle between the side of the drop and the plane is measured. The quality of a monolayer can be estimated from these wetting measurements. The contact angles measured on the films ranged from 88 to 102 degrees with diiodomethane and up to 115 degrees with water. Additionally, these films seem to be very robust. A series of treatments were performed with the following results: high pressure water wash following by a 100° C bake - changed the diiodomethane angle by only 4 degrees; soap and water wash - no change; one hour soak in acetone - no change; one hour soak in HOT sulphuric acid plus a strong oxidizer followed by a fifteen minute water wash - no change; one and a half hours in a UV/O₃ oven - no change; forty second 0₂ + NF₃ ash in a plasma reactor - water contact angle reduced to only 55 degrees, but film still partially present; and a supercritical CO₂ clean - diiodomethane contact angle reduced to 75 degrees (about half of film left). These results demonstrate the robustness and passivity of these films.

This process differs from the current state of the art in several ways. Among those are the use of the surface preparation using UV/O₃, the choice of a fluorinated precursor in some embodiments, and in the case of the vapor technique, a non-fluid based application.

Thus, although there has been described to this point a particular embodiment for a material and process for micromechanical device protection, it is not intended that such specific references be considered as limitations upon the scope of this invention.

## Claims

1. A method for applying a protective coating to a surface of a micromechanical device comprising the steps of:
cleaning said device with UV/O₃ to cause said surfaces to be activated;
exposing said activated surfaces to a material and causing said material to deposit on said activated surfaces forming a protective coating; and
baking said device with said protective coating.

2. The method of Claim 1, wherein said exposing step comprises the step of immersing the device in liquid in a container.

3. The method of Claim 2, wherein said exposing step comprises the step of rinsing said device in said container and removing said device from said container.

4. The method of Claim 1, wherein said exposing step comprises placing said device and a small amount of said material in a container in a water free atmosphere.

5. The method of any of Claims 1 to 4, wherein said exposing step comprises exposing said activated surfaces to a material having molecules with a partially chlorinated head group and an alkyl-chain tail.

6. The method of Claim 5 wherein said exposing step comprises exposing said activated surfaces to a material comprising molecules of 1H, 1H, 2H, 2H, perfluorodecyltrichlorosilane.

7. A method of applying a protective coating to aluminum surfaces of a micromechanical device, comprising the steps of:
cleaning the aluminum surfaces of said device to cause said surfaces to become activated;
exposing said activated surfaces to a vapor containing a chlorosilane material, wherein said chlorosilane material and said aluminum react to form said protective coating on said activated surface; and
baking said devices.

8. The method of Claim 7, wherein said exposing step comprises exposing said activated surfaces to a chlorosilane material comprising 1H, 1H, 2H, 2H, perfluorodecyltrichlorosilane.

9. The method of Claim 7 or Claim 8, wherein said exposing step comprises the step of placing said device in a container and placing said material in the lid of said container.

10. The method of Claim 9, wherein said placing step further comprises heating said container to raise the vapor pressure of said material.

11. The method of any of Claims 7 to 10, wherein said exposing step comprises forming bonds between adjacent molecules of said protective coating on said surface.

12. A micromechanical device, comprising:
aluminum surfaces that register against other surfaces; and
a monolayer of protective material on said aluminum surfaces, wherein molecules of said monolayer are bonded to said aluminum surfaces and to adjacent molecules of said monolayer.
